# EUROPEAN PATENT APPLICATION

(11) **EP 1 038 581 A1**
(43) Date of publication of application: **27.09.2000**
(21) Application number: 00105644.9
(22) Date of filing: 16.03.2000
(51) Int. Cl.: B03B 5/40, B03B 5/52, H01M 10/54, B01J 19/20

(54) **Equipment and process to make separations and reactions among solids in aqueous suspensions and/or among liquids and solids**

(30) Priority: 22.03.1999 IT MI990570
(71) Applicant: Eco-Bat S.p.A., 20037 Paderno Dugnano (Mi) (IT)
(72) Inventor: Eco-Bat S.p.A., 20037 Paderno Dugnano (Mi) (IT)

(57) **Abstract**

It is described an equipment able to make, in liquid suspension, either separations between size solids, being previously crushed and made dirty in the surface by fine particles deposits of various composition, or chemical reactions between the liquid of the suspension and the solids; the equipment is characterised by the fact that it consists of a vessel (1) whose plan is composed of a rectangle having almost equal sides and a trapezium having the longer base coinciding to a rectangle side, and it is equipped with a slopped upwards bottom (5), towards which the inner walls, formerly verticals, converge to form a channel (6) with the same bottom. Solids are fed from the top (12) by a known system and in an almost barycentric position compared to the plan and find, in the liquid, the time and physical conditions to float and to sediment according to their specific gravity and to that one of the liquid, intermediate among those ones of solids. While solids, lighter than liquid, floating, are conveyed by a feed vane, or other similar system, towards the overflow pipe together with the liquid, the solids, heavier than liquid, sediment and are conveyed upwards up to the outlet hole by a screw conveyor (9) along the slopped bottom (5) in order to cross the liquid head up to the out-of-liquid drainage zone (15) which consists of an extension both of the bottom and the screw feeder, where solids are furthermore washed by liquid spraying, to which, in a separate vessel, a reagent has been added to make the fine particles, stuck to the surfaces of all fed solids, soluble during their staying into the liquid suspension.

## Description

This invention Relates to an equipment able to make the separation in dense liquid means of size solids having different specific gravity, intermediate compared to that one of the suspension liquid, as well as solids cleaning by sweeping away fine particles, made of metallic compounds and stuck to the surfaces of fed size solids, which must be removed because they contaminate these size solids at all events when agitation is a critical operation because of the low difference in specific gravity of solids to be separated.

In particular in secondary lead metallurgy for the recovery and re-use of the material contained in exhausted lead-acid batteries, the equipment can be used for the separation of polyethylene (PE), heavier, from polypropylene (PP), lighter, being the terms light and heavy referred to density of liquid, formed by industrial water, preferably with the addition of inorganic compounds and more preferably of sulphuric acid coming from exhausted lead-acid batteries processed in secondary lead metallurgical plants.

Actually, from the different known hydro-metallurgical of beneficiation of such spent lead acid batteries for the separation and the recovery of all their metal and non-metal components, different materials are obtained. The main materials are metal lead, generally alloyed, named "grids", lead in oxidised form contained in the active mass named "paste", ebonite scrap (actually in smaller and smaller quantity), PP and a material flow generally named PVC by means a hydrodynamic separation, being this flow made of polyvinyl chloride (actually less and less used in the manufacturing of lead acid batteries), of PP and of PE. All the above-said plastic materials are contaminated by a fine particles, hereinafter shortly called "paste" physically stuck to their surfaces, made of metal lead and mainly PbO₂ rich paste. This situation causes both the loss of PP and of PE, which show a fairly good market value as a reusable form in plastic materials industry, and an environmental problem related to the dispatch to dump of the so-called PVC, dangerous because it is polluted by lead and because of its quantity that is increased by the presence of PP and PE, polluted by lead all the same.

The simple application of specific physical operations, for example crushing , wet screening and washing, let the separation of PVC, PP and PE but, in consequence of the good adhesion between lead-bearing particles and such plastic materials surface, this application does not solve the problem of their cleaning from lead satisfactorily, mainly for the PE that is the most tender and contaminated plastic material among all the considered ones. Furthermore as is known, by using an aqueous solution of sulphuric acid, abundantly available in secondary lead plants as drained from exhausted batteries, it is not possible to leach lead existing in the paste in form both of sulphate and mainly PbO₂ , which is contained in it in large percentage, and to let it soluble without a preliminary treatment for PbO₂ reduction.

In the presence of plastic materials, pyrometallurgical processes are not suitable in consequence of natural softening of plastics, besides of cost, of careful controls of thermal and chemo-physical conditions and of safety. Other known and/or patented hydro-metallurgical process suggest the leaching with alkali but they are either not efficient for PbO₂ solution (for example the leaching with sodium acetate solution) or expensive (for example thermal reduction of PbO₂ under a SO₂ atmosphere, or reduction of PbO₂ by sodium sulphide or bisulphide and so on). It is necessary to emphasise that all these processes, thermal or Hydro-metallurgical type, have never been applied to plastic materials coming from exhausted lead-acid batteries, but they are tested on lead compounds of paste-phase of such scrapped batteries to let them suitable to a hydro-metallurgical route up to lead electrowinning.

It is an object of this invention to provide a method for solving the above said problems and to this aim a continuous working and fully hydro-metallurgical equipment which solves both the problem of a high yield recovery of PE coming from exhausted Pb-acid batteries, and the PE cleaning from paste by the chemical reaction of PbO₂ reduction by means of hydrogen peroxide.

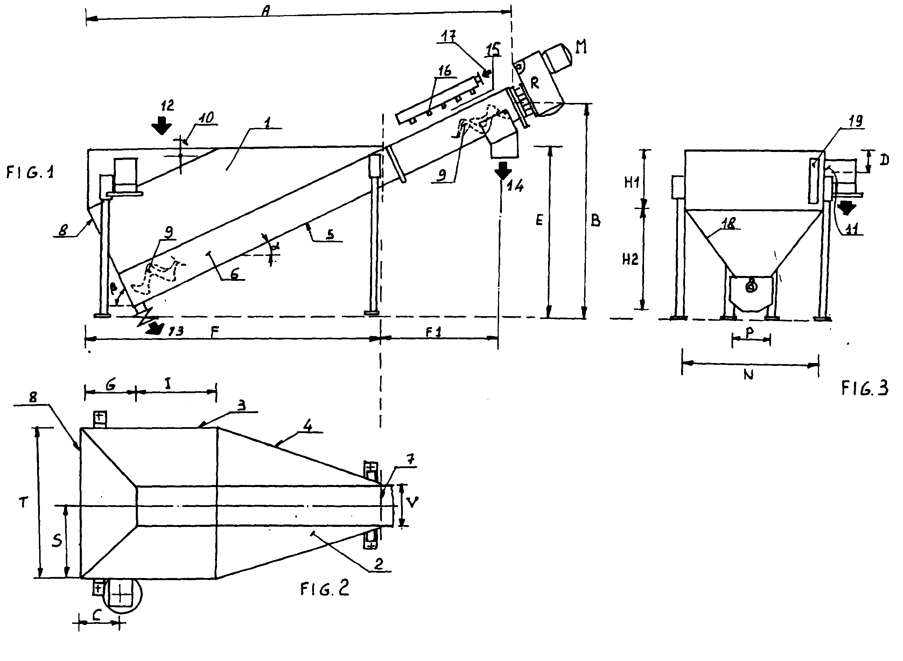

To describe in more precise details the equipment, object of the present invention, reference to the accompanying drawings 1, 2 and 3 is made in the following description in which, schematically and byway of example, Figure 2 is the plan view of the equipment, Figures 1 and 3 are two side views of the same apparatus and, to have the invention more readily understood, figures are written in the three figures and they are used, written in brackets ( ), both in the following description of the equipment and in the claims.

The equipment of the present invention, suitable to carry out the separation of solids in liquid suspension, is characterised in that it consists of a vessel (1), preferably made of metal belonging to steel types, liquid corrosion resistant which shows an upper plan (2) composed of a square or of a rectangle (3) and of a trapezium (4) having the longer base coinciding to a side of the square or of the rectangle, in which preferably the ratio between the length of the vessel (1) and the longer base of trapezium (4) is comprised within the range of from 1 to 4. The vessel (1) is equipped with a slopped upwards bottom (5), with an angle of elevation (α) as to ground plane lower than 50°, and more preferably in the range of from 15° to 25°, towards which the walls (18), parallel to vessel (1) length converge to form a channel (6) with the same bottom. It is preferred but not limitative that such walls (18), before converging, have a vertical portion of surface. This channel (6) continues upwards above of liquid level in the vessel (1), and it substantially forms one of the walls of the shorter dimension (7) of the same vessel, while the opposite wall (8) is sloping towards the centre of the vessel and it converges to form an angle of elevation (β) as to ground plane, preferably equal to 90°-α.

It is preferred but not limitative that this wall (8), before converging, has a vertical portion of surface.

Along the channel (6) and its whole length, a system of Archimedean screws (9) is set up, preferably without shaft and bearings or pillow blocks, driven by a motor (M) and a variable revolutions reducer (R) , so the Archimedean screws have a revolving speed less than 100 revolutions per minute (rpm), preferably between 5 and 20 rpm, and in order to avoid turbulence which can prevent the sedimentation of the heavier solid than the liquid of the suspension, being this heavier solid the PE in the case of feed materials coming from the processing of exhausted lead-acid batteries.

In fact, from the viewpoint of solids separations in dense liquid medium, the reliability of the equipment is granted by the minimum number of parts in motion, in practise only the Archimedean screws are under motion, and by the total lack of bearings, of pillow blocks, of diaphragms and of seals within the liquid phase.

The starting solids are fed from the top (12) by a known system and in an almost preferably barycentric position compared to the upper plan (2) of the vessel (1).

While the lighter solids than the liquid phase, the PP which consequently floats, are conveyed by suitable apparatus in order to let them go ahead and be collected, for example by either a system of Archimedean screws or a feed vane, towards the overflow pipe (11) for their discharge together with the liquid, the heavier solids than the liquid phase, i.e. the PE, settle and are conveyed upwards up to the outlet hole by the above mentioned screw conveyor (9) along the slopped bottom (5) in order to cross the liquid head up to the out-of-liquid drainage zone (15), which consists of the above said extension both of the bottom and of the screw conveyor , where solids are furthermore washed by a number of sprayers (16) of liquid (17) to which, in a separate tank, a reagent has been added to make the fine particles, stuck to the surfaces of all fed solids and rich of metal lead and paste, soluble during their residence time in liquid suspension.

At the bottom of the vessel an outlet drain pipe (13), equipped with a proper valve, is provided for the periodic discharge both of paste, which has been taken down from fed solids surface, and of liquid in the vessel for the necessary maintenance.

The above described equipment can allow that, on the vertical walls pertinent to the square or to the rectangle (3) (8) in the plan (2) of the vessel (1) one or more ultrasonic waves generators (19) for the release of paste. The ultrasounds power in the liquid of vessel must be preferably of at most 20 kW per cubic meter of liquid phase. The ultrasonic waves frequency is preferably comprised within the range of from 20 to 25 kHz and /or from 35 to 38 kHz, or more preferably the ultrasounds are multi-frequency or multi-sonic. In this way a release or better a roughing-out of the lead-bearing particles (paste), stuck to the surface of plastic material under process in the liquid of the vessel (1), occurs according to an approach followed in other industrial sectors for chips roughing out in precision tooling and in washing of dies. The particles either are cleanly released from PE surface or remain sticking on PE surface but without the adhesion force they had before ultrasounds treatment. Thus the PE, which tends to settle because of its specific gravity compared to liquid density and it is pushed upwards by a system of Archimedean screws (9) placed along the slopped bottom (5) of the vessel, is effectively washed from lead bearing particles (paste) by sprayers (16) of industrial water or preferably of a solution of industrial water added by undrained exhausted batteries acid drainage, in order to cause the release of lead bearing particles on the surfaces of all the types of fed coarse organic materials.

Then the PE is discharged from the vessel (1) by the same system of Archimedean screws (9) in a set of known mechanical devices, not represented in the accompanying drawings, suitable to the filtration/separation of PE from liquid, to the conveying and at last to the collection in a storage bin, ready to be sold because of its industrially reusable form.

If ultrasonic generators (19) are set up, the method defined in the following description does not include the use of the hydrogen peroxide because release of paste is carried out through physical waves and not through chemical process.

Another object of this invention is to provide a method which makes use of the above described equipment and it is characterised in that it comprises the following steps.

The starting coarse plastic solids, preferably crushed and separated from each other by treatment according to known technologies in order both to separate PVC before their feed to equipment of this invention, and to let them have a size (granulometry) smaller than 25 mm, preferably less than 20 mm, are fed from the top (12) by a known system and in a preferably barycentric position compared to the upper plan of the vessel (see Figure 2) and find, in the liquid phase, the residence time and the physical conditions to float and to sediment according to their specific gravity and to that one of liquid phase, intermediate among those ones of fed solids.

The solid/liquid ratio in the vessel (1) is preferably less than 100 grams (g) of solid per litre, and more preferably comprised within the range of from 1 to 10 g of solid per litre, and the statistical residence time of liquid in the same vessel is preferably comprised within the range of from 10 to 180 minutes, more preferably from 20 to 30 minutes, in order to allow separation among solids and the completion of the reaction between paste and hydrogen peroxide.

The process, proposed in this invention, of rendering soluble the PbO₂ present in the paste stuck to the surface of fed solids and mainly on PE, is fully described in the technical and scientific literature and, for example, for a completely different application (lead electrowinning) published in the British Patent Application Nr. 8700205 (date of filing 7 Jan. 1987, GB 2185348A), is characterised in that it comprises the carrying out of the following chemical reactions:

◇ Pb⁴⁺ + H₂ O₂ ⇒ Pb²⁺ + O₂ + 2H⁺ (R1)

◇ Pb⁴⁺ + Pb ⇒ 2 Pb²⁺ (R2)

up to the quantitative reduction of all the lead dioxide contained in the lead bearing particles (paste) stuck to plastic materials surface. The use of hydrogen peroxide, in addition to give chemical reaction R1 an high yield nearly stoichiometric, shows many other advantages, among them:
■ It does not show toxicity, important circumstance in industrial processes with open devices and vessels
■ It is easily found at not high cost by considering the benefits for environment in term of lower quantity of PVC and PP to be dumped and the maximum recovery of PE, suitable material to an industrially re-usable form
■ It can be accurately proportioned, also by using visual information on process evolution through the colour change of the liquid slurry from dark red of lead dioxide to more or less dark grey.

More in detail during the acid leaching of paste particles, the hydrogen peroxide causes the following reaction to occurs :

Pb⁴⁺ + H₂ O₂ ⇒ Pb²⁺ + O₂ + 2H⁺ (R1)

and consequently almost the overall quantity of PbO₂ is reduced to PbO and it is dissolved in the sulphuric acid solution in the vessel.

Because during the reaction (R1) a large quantity of O₂ is produced, from a chemo-physical viewpoint the surface of metal lead particles, always present in the paste, becomes activated and thus the kinetics of the following reaction (R2) is enhanced:

Pb⁴⁺ + Pb ⇒ 2 Pb²⁺ (R2)

and consequently the metal lead is dissolved as well, and the more it becomes easily soluble, the more the metal grain size is small.

Furthermore by the reaction (R2), hydrogen peroxide cam be saved proportionally to the stoichiometric ratio equal to the Pb⁴⁺ reduced by metal Pb.

The so-processed PE in the vessel (1), because - as said above - it tends to settle, is conveyed by a system of Archimedean screws (9) which is placed along the slopped bottom of the said vessel, and through a set of sprays (16), which are fed with a water solution of sulphuric acid coming from exhausted batteries draining and prepared in a proper separated tank already with the addition of hydrogen peroxide, it is washed and cleaned from remaining lead bearing particles before being discharged (14) through the same screw conveyor (9) in a sequence of mechanical known devices, non represented in accompanying Figures 1 - 2 - 3, suitable to filtration/separation of PE from liquid, to the conveying and to the collection in a storage bin ready to be sold because of its industrially re-usable form.

The hydrogen peroxide, as a solution at 50% for example or in other commercial percentage, is added to the sulphuric acid solution coming from the drainage of undrained exhausted batteries in small excess respect to the stoichiometric quantity according to the above written reactions (R1) and (R2) on the basis of chemical analysis and evaluation of fed solid materials. According to the performances of the known technologies for processing spent lead-acid batteries, the residual quantity of paste stuck to the PE surface is such that the hydrogen peroxide concentration in the solution is lower than 5%, preferably within the range of from 1 to 2%.

The yield of reaction (R1) higher than 90% is reached respect to stoichiometric one.

The invention is now described in a detailed and industrial application by reference to the following non limitative example.

### Example

In a Plant with a treatment capacity of 500 ton of undrained exhausted lead acid batteries per day, an impure PVC is produced after separation, from which and after a number of grindings and screenings carried out in known devices, an impure PE is produced with the following composition

| | Kg/hr | % |
|---|---|---|
| PbO₂ | 16 | 6.5 |
| PP | 8,5 | 0,71 |
| PE | 215 | 88 |
| Others | 4,5 | 2 |
| Total | 244 | 100 |

The ebonite and the PVC contents are negligible (traces lower than 0.05%) and are not mentioned.

After the treatment in two identical vessels in series at a feed rate of impure PE of 244 Kg/hr, with industrial water added with sulphuric acid and hydrogen peroxide, the following results in terms of chemical composition and of production:

| | PP | PE |
|---|---|---|
| Production, Kg/hr | 19 | 210 |
| Purity | >50% | >99% |

And more exactly the PE has the following composition in percent:

| Phase | % |
|---|---|
| PbO₂ | 0,10 max |
| PP | 0,20 max |
| PE | > 9 |
| others | 0,5 max |

with a H₂ O₂ consumption of 1.5 Kg/h.

Referring to the accompanying drawings (Figures 1 - 2 - 3), the two vessels have the following dimensions defined in mm:
A= 5000 mm; B= 2650 mm; C=750 mm;
D= 200 mm; E= 1700 mm; F= 3050 mm; F1= 1340 mm;
G= 625 mm; H1= 640 mm; H2= 1000 mm; I= 750 mm;
N= 1620 mm; P= 530 mm; S= 750 mm; T= 1500 mm; V= 460 mm.
α= 25°; β= 65°

The engine (M) has a power of e kW and the reduction gear ® assures 10 revolutions per minute (rpm), with a possible change within a range of from 5 to 8 rpm. The liquid flow rate (17) out of spray (16) is 75 litre per minute, with a statistical residence time in each vessel equal to 24 minutes, being liquid already prepared in a separate tank with a sulphuric acid content and hydrogen peroxide respectively equal to 100 grams per litre and 20 grams per litre.

## Claims

1. Equipment for carrying out separations and reactions among solids in aqueous suspension and/or among liquids and solids, characterised by the fact that it essentially consists of:
• vessel (1), which shows an upper plan (2) composed of a square or of a rectangle (3) and of a trapezium (4) having the longer base coinciding to a side of square or of rectangle
• the vessel (1) is equipped with a sloped upwards bottom (5), with an angle of elevation (α) as to ground plane lower than 50°, towards which the walls (18), parallel to the vessel (1) length, converge to form a channel (6) with the same bottom
• the channel (6) continues upwards above of liquid level in the vessel (1) and this channel substantially forms one of the walls of the shorter dimension (7) of the same vessel, while the opposite wall (8) is sloping towards the centre of the vessel and to the bottom
• along the channel (6) and its whole length, a system of Archimedean screws (9) is set up, driven by a motor (M) and by a variable revolutions reducer (R)
• at the bottom of the vessel (1) an outlet drain pipe (13) is provided for the periodic discharge of content of the same vessel
• suitable apparatus (10), for example by a system of Archimedean screws or a feed vane, to convey and to collect towards the overflow pipe (11) the solids which float on liquid phase, for their discharge together with the liquid phase, while the heavier solids than the liquid phase settle and are conveyed upwards up to the outlet hole (14) by screw conveyor (9) along the slopped bottom (5), in order to cross the liquid head up to the out-of-liquid drainage zone (15), which consists of the above said extension both of the bottom (5) and of the screw conveyor (9)
• set of sprayers (16) of liquid, which forms the liquid phase of suspension in the vessel (1), suitable to the washing of solids conveyed by the system of Archimedean screws (9) at the outlet from the same liquid phase.

2. Equipment according to claim 1, characterised in that the vessel (1) is preferably made of metal belonging to liquid corrosion steel types.

3. Equipment according to claim 1, characterised in that the ratio between the length of the vessel (1) and the longer base of trapezium (4) is preferably comprised within the range of from 1 to 4.

4. Equipment according to claim 1, characterised in that the angle of elevation (α) as to ground plane is preferably comprised within the range of from 15° to 25°.

5. Equipment according to claim 1, characterised in that the walls (18), parallel to the vessel (1) length and before converging to form a channel (6) with the vessel (1) bottom (5), have preferably a vertical portion of surface

6. Equipment according to claim 1, characterised in that the angle (β) of wall (8) respect to ground plane is preferably equal to 90°-α.

7. Equipment according to claim 1, characterised in that the wall (8), before converging, has a vertical portion of surface.

8. Equipment according to claim 1, characterised in that the system of Archimedean screws (9) is preferably set up without shaft and bearings or pillow blocks.

9. Equipment according to claim 1, characterised in that the system of Archimedean screws (9), driven by a motor (M) and a revolutions reducer (R), has a revolving speed lower than 100 revolutions per minute (rpm), preferably within the range of from 5 to 18 rpm.

10. Equipment according to anyone of the preceding claims 1 to 9, in which on the vertical walls (3) (8) pertinent to the square or to the rectangle in the plan (2) of the vessel (1) one or more ultrasonic waves generators (19) can be set up and dipped in liquid phase, for the release of paste stuck to the surface of fed plastic materials, characterised by the following essential facts:
• The net power of ultrasonic waves in the liquid of the vessel is preferably lower than 20 kW per cubic meter of liquid and more preferably equal to 10 kW per cubic meter of liquid phase
• The ultrasonic waves frequency is preferably comprised within the range of from 20 to 25kHz and/or from 35 to 38 kHz, or more preferably the ultrasounds are multi-frequency or multi-sonic.

11. Equipment according to claim 1, characterised in that the vessel (1) can be one or more in series.

12. Process for carrying out reactions among solids in aqueous suspension and/or among liquids and solids, characterised in that it is carried out by means of an equipment according to anyone of the preceding claims 1 to 10 and
a) it comprises the step of processing in the vessel (1) the polypropylene and of polyethylene with an aqueous solution of sulphuric acid and hydrogen peroxide in order to reduce PbO₂ and to let it become soluble by means of carrying out of the following chemical reactions:
◇ Pb⁴⁺ + H₂ O₂ ⇒ Pb²⁺ + O₂ + 2H⁺ (R1)
◇ Pb⁴⁺ + Pb ⇒ 2 Pb²⁺ (R2)
up to the quantitative reduction of all the lead dioxide contained in the lead bearing particles stuck to plastic material surface
b) it is characterised in that the solid/liquid ratio in the vessel (1) is lower than 100 grams of solid per litre and the statistical residence time of liquid in the same vessel is comprised within the range of from 10 to 180 minutes in order to allow separation among solids with different specific gravity and the completion of the reaction between fine particles stuck to fed solids surface and the reactive compound suitable to let them become soluble, in particular between the lead paste, coming from exhausted lead acid batteries and constituting the fine particles stuck to plastic polypropylene-based and polyethylene-based materials, and hydrogen peroxide.

13. Process according to claim 12, characterised in that in said step b) the solid/liquid ratio in the vessel (1) is preferably comprised within the range of from 1 to 10 grams of solid per litre.

14. Process according to claim 12, characterised in that in said step b) the statistical residence time of liquid in the vessel (1) is preferably comprised within the range of from 20 to 30 minutes.

15. Process according to claim 12, characterised in that in said step a) the liquid, which will constitute the suspension medium in the equipment according to anyone of the preceding claims 1 to 11, is prepared in a separate tank by adding a soluble inorganic compound, preferably sulphuric acid, to water in order to get a solution with a specific gravity that is intermediate between solids to be separated.

16. Process according to claim 12, characterised in that in said step a) the weight content of sulphuric acid, preferably coming from the drainage of undrained exhausted lead acid batteries, is at most 40%, preferably lower than 10%

17. Process according to claim 12, characterised in that a reagent, suitable to let particles, stuck to the surface of all the fed solids (12), become soluble during their residence in liquid phase suspension of the vessel (1), is added to liquid which constitutes the suspension itself in the same vessel (1).

18. Process according to claim 12, characterised in that for the solids made of plastic materials coming from exhausted lead acid batteries, hydrogen peroxide is added in excess of almost 20%, preferably of 10%, respect to stoichiometric quantity in order to have the reduction of lead dioxide contained in all the fed solids.

19. Process according to claim 12, characterised in that before feeding the polyethylene-based plastic material, this material is preferably crushed by a mill, preferably by a blade mill, in order to reduce its size under 50 millimetres, preferably under 25 millimetres.

20. Process according to claim 12, characterised in that the starting solids to be processed are fed from the top (12) and in an almost barycentric position compared to the upper plan (2) of the vessel (1).
